# EUROPEAN PATENT SPECIFICATION

(11) **EP 0 554 577 B1**
(45) Date of publication and mention of the grant of the patent: **20.05.1998**
(21) Application number: 92200284.5
(22) Date of filing: 03.02.1992
(51) Int. Cl.: H04N 5/445, H04N 5/45

(54) **Television receiver with integrated graphics generator for displaying advertisements**
Fernsehempfänger mit integriertem Grafikgenerator für Werbungsanzeigen
Poste de télévision avec générateur intégré des graphiques pour l'affichage des publicités

(43) Date of publication of application: 11.08.1993
(73) Proprietor: Philips Electronics N.V., 5621 BA Eindhoven (NL)
(72) Inventor: Jernigan, Forest, NL-5656 AA Eindhoven (NL); Bingham, Joseph Peter, NL-5656 AA Eindhoven (NL)
(74) Representative: Steenbeek, Leonardus Johannes

(56) References cited:
- EP-A- 0 148 733
- EP-A- 0 183 851
- EP-A- 0 451 622
- US-A- 4 344 090
- US-A- 4 543 606
- US-A- 4 751 578

## Description

### BACKGROUND OF THE INVENTION

### Field of the invention

The invention relates to a television receiver, comprising circuits for receiving, processing and displaying television signals, a controller having user operable control switches to cause said circuits to perform standard operating functions, and an arrangement for locally generating commercial advertising. The invention relates also to a method of advertising on a such a television receiver.

### Description of the related art

Various television networks broadcast televised entertainment to the consumer free of charge. This is made economically possible by the inclusion of paid advertisements with the televised entertainment. Depending on the popularity of the particular televised program, advertisers are charged varying fees for their advertisements. These fees are also dependent on the length of each advertisement, the frequency of occurrence and the number of days (weeks, months) over which the advertiser desires the advertisement to be broadcast.

Quite understandably, this form of advertising is very costly; for example, a single minute of advertising during the Super Bowl may cost upwards of one million dollars.

United States Patent US-A-4,751,578 discloses a television receiver for viewing locally stored programming information. The known receiver includes an arrangement comprising means for storing data representing said programming information, means for converting said stored data into local video signals for display, control means coupled to said storing means for applying stored data representing said programming information to said converting means, and switching means for switching said local video signals to the display of said television receiver. The locally stored video signal may also be a commercial message.

In the known receiver, the generation and display of the local video signal is controlled by the viewer, by pressing a button specially intended for that purpose.

European Patent Application EP-A-0 451 622 discloses a television receiver which displays a locally stored time planner. The locally stored video signal is displayed upon switching the receiver on and off. This ensures that the time planner is always brought to the user's attention, without bothering him while he is watching regular television programs.

United Stated Patent US-A-4,344,090 discloses a television receiver having a demo mode in which the receiver displays a locally stored advertisement at regular time intervals.

### SUMMARY OF THE INVENTION

It is an object of the present invention to provide a television receiver and a method by which commercial advertisements are delivered to the consumer in a manner which better suits an advertiser's wishes.

In accordance with the invention, this is achieved by a television receiver which is characterized in that the control means includes sensing means for sensing the operation of at least the control switches for channel selection or audio volume control, and for effecting the display of said commercial video signal in response to said sensing operation of said control switches.

With the invention is achieved that an advertiser may have his/her advertisements encoded and stored in a read-only memory by a television receiver manufacturer upon the payment of an advertising fee. This ROM is then installed into television receivers containing the arrangement of the invention. Thereafter, at various times during operation of the television receiver by the consumer, the advertiser's advertisement is displayed on the screen of the television receiver. The displaying of the advertisement is triggered by the operation of often-used control functions of the television receiver such as channel change and/or sound volume control.

The advertisement may take the form of a static image which appears on the screen in the same manner as the known "on-screen" channel number displays, as a banner across the bottom of the screen, etc., or as an animated image in the above manner. In the event that multiple advertisements are stored in the ROM, the arrangement of the invention may then cycle through to the next one of these advertisements each time it is to display one.

The invention also contemplates the ability to update the contents of the advertisement memory such that new advertisements may be stored at a later date. The data representing these new advertisements may be sent to the television receiver over telephone lines, cable television services, broadcast data services, etc.

In order to ensure that the paid-for advertisements are indeed periodically shown on the television receiver, the arrangement may include circuitry which defeats the operation of the television receiver if the arrangement has been tampered with by the consumer or any other unauthorized service person.

### BRIEF DESCRIPTION OF THE DRAWINGS

With the above and additional objects and advantages in mind as will hereinafter appear, the invention will be described with reference to the accompanying drawings, in which:
Fig. 1 is a block diagram of an arrangement according to the invention; and
Figs. 2A-2E are representative displays on the television receiver showing various ways in which the advertisements may be presented.

### DESCRIPTION OF THE PREFERRED EMBODIMENT

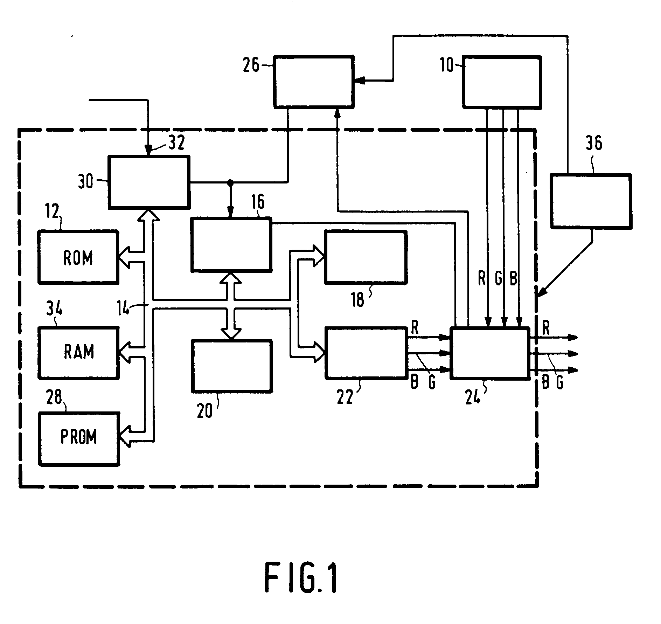

Fig. 1 shows a block diagram of an embodiment of the invention in which the arrangement is incorporated within a standard television receiver. In particular, the television receiver includes conventional receiver circuits 10, including a tuner, an audio processing circuit and a video processing circuit. The convention receiver circuits 10 provide video signals (RGB in the case of color) which are applied to a picture tube (not shown) for display.

In a first embodiment of the invention, the arrangement includes a read-only memory (ROM) 12 in which data representing the various advertisements are stored. This ROM 12 is connected by a data bus 14 to a micro-controller 16 which, in conjunction with a program stored in program memory 18 coupled thereto by the data bus 14, determines when and which one of the various advertisements are to be displayed. To this end, a graphics & memory controller 20 is coupled to the micro-controller micro-controller 16 and the ROM 12 for addressing the ROM 12 under control of the 16 and for generating the appropriate graphic images representative of the data being addressed in the ROM 12. The output from the graphics & memory controller 20 is applied to a pallet controller 22 (in the event of color) via the data bus 14 which generates the RGB video signals for the particular advertisement. The RGB outputs of the pallet controller 22 are applied to a first input set of a switch 24 which receives at a second input set the RGB video signals from the conventional receiver circuits 10. Under control of the micro-controller 16, this switch 24 then selectively applies the advertisement video signals to the picture tube for a predetermined period of time.

In the above configuration, the micro-controller 16 causes the advertisements to be displayed at regular time intervals in sequence. To this end, the micro-controller 16 includes an internal clock/calendar. However, it may be alternatively desired that the advertisements be displayed whenever a control function of the television receiver is addressed.

In a second embodiment of the invention, the television receiver includes a receiver controller 26 which incorporates at least the power-on switch, the channel-up and -down control and the volume control. When any of these control functions are utilized, the receiver controller 26, in addition to performing the desired function, sends a control signal to the micro-controller 16 indicating which of the control functions was operated. The micro-controller 16 then causes one of the advertisements to be displayed for a predetermined period of time.

In a third embodiment of the invention, the ability to update the advertisements is provided. The arrangement includes a programmable read-only memory (PROM) 28 which is also coupled to the data bus 14. A graphics update interface 30 is also coupled to the data bus 14 for providing update data to be written into the PROM 28 under the control of micro-controller 16 and the receiver controller 26. The graphics update interface includes a data input 32 for receiving the data updates which may be provided through data port in the television receiver connected to telephone lines, cable television services or broadcast data services.

In a fourth embodiment of the invention, the consumer may be given the added benefit of including with the advertisements, various consumer programmable information including birthday or anniversary announcements, holiday greetings, seasonal notices, etc. Random-access memory (RAM) 34 is shown connected to data bus 14 for storing this consumer programmable information. In response to on-screen instructions effected by the receiver controller 26 and the micro-controller 16, the consumer is instructed to enter the appropriate information through the receiver controller 26 for storage in the RAM 34. Thereafter, the micro-controller 16 causes this information to be displayed sequentially with the advertisements in the ROM 12 and/or the PROM 28.

In order to ensure that the paid-for advertising is indeed displayed, the arrangement includes a protection circuit 36 for detecting whether the arrangement has been tampered with by the consumer or any unauthorized service person. In the event that the protection circuit 36 detects tampering, a signal is sent to the receiver controller 26 disabling the television receiver until an authorized service person resets the system.

Finally the arrangement may include an auditing function to enable the logging into memory of the actual displaying of the advertisements. To this end, the micro-controller 16 applies this data to the RAM 34 which may at some later time be interrogated for its contents.

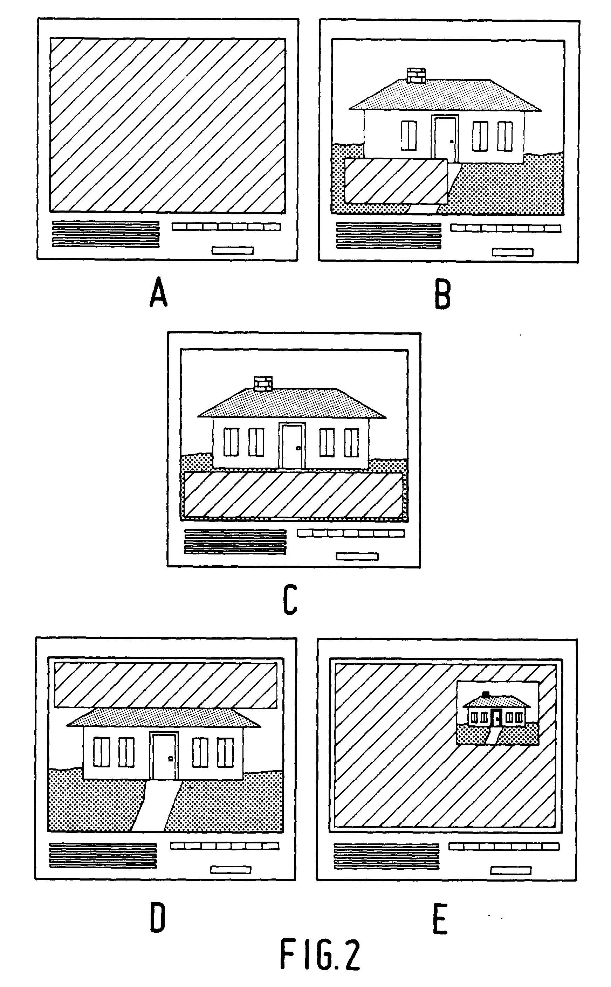

It should be understood that the display of the advertisements may take any convenient form. In particular, for example, upon power-on, an advertisement may be displayed full screen for a predetermined period of time as shown in Fig. 2A. When a channel change function has been selected, the advertisement may appear as a small insert along with, if available, the on-screen channel display as shown in Fig. 2B. Alternatively, the advertisement may appear as a banner across the bottom or top of the display screen (see Figs. 2C and 2D). If the television has a PIP function, the advertisement may be displayed full screen while the picture being watched is displayed as the PIP (Fig. 2E).

## Claims

1. An arrangement in a television receiver for locally generating commercial advertising for display, said television receiver comprising circuits (10) for channel selection and for processing and displaying selected television signals, a controller (26) having a plurality of user operable standard control switches for controlling respective standard operating functions of the television receiver, said arrangement comprising:
means (12,34,28) for storing data representing a commercial advertisement;
means (20,22) for converting said stored data into a commercial video signal for display;
control means (16) coupled to said storing means for applying stored data representing said commercial advertisement to said converting means;
switching means (24) controlled by said control means for switching said commercial video signals to the display of said television receiver;
characterized in that the control means includes sensing means for sensing the operation of at least the control switches for channel selection or audio volume control, and for effecting the display of said commercial video signal in response to said sensing operation of said control switches.

2. An arrangement as claimed in claim 1, wherein the stored data represents a plurality of advertisements, the control means being adapted to cycle through these advertisements each time it is to display one.

3. An arrangement as claimed in claim 1 or 2, characterized in that said arrangement further comprises means for updating said data stored in said storing means.

4. An arrangement as claimed in claim 1, 2 or 3, characterized in that said arrangement further comprises means for sensing whether said arrangement has been disconnected from said television receiver, and disabling means connected to said television receiver for disabling the operation thereof in response to said sensing means.

5. A method of advertising on a television receiver comprising circuits (10) for receiving, processing and displaying television signals, a controller (26) having user operable standard control switches for controlling various standard operating functions of the television receiver, the method comprising the steps of:
locally storing data representing a commercial advertisement;
converting said stored data into a commercial video signal for display;
applying stored data representing said commercial advertisement for conversion into said commercial video signal;
switching said commercial video signal to the display of said television receiver;
characterized by the step of sensing the operation of at least the control switches for channel selection or audio volume control, and effecting the display of said commercial video signal in response to said sensing operation of said control switches.

6. A method of advertising as claimed in claim 5, wherein the stored data represents a plurality of advertisements, the method comprising the step of cycling through these advertisements each time it is to display one.

7. A method of advertising as claimed in claim 5 or 6, wherein said method further comprises periodically updating said data to represent different commercial advertisements.

8. A method of advertising as claimed in claim 5, 6 or 7, wherein said step of switching said video signal effectively superposes said commercial advertisement over a portion of the displayed picture.

9. A method of advertising as claimed in claim 5, 6, 7 or 8, wherein said commercial advertisements consist of animated images.

## Patentansprüche

1. Schaltungsanordnung in einem Fernsehempfänger zur örtlichen Erzeugung kommerzieller Anzeigen zur Wiedergabe, wobei dieser Fernsehempfänger Schaltungsanordnungen (10) aufweist zur Kanalwahl und zur Verarbeitung und Wiedergabe selektierter Fernsehsignale, eine Steuereinheit (26) mit einer Anzahl vom Gebraucher betätigbarer Steuerschalter zur Steuerung der betreffenden Betriebsfunktionen des Fernsehempfängers, wobei diese Schaltungsanordnung die nachfolgenden Mittel aufweist:
Mittel (12,34,28) zur Speicherung von Daten, die eine kommerzielle Anzeige darstellen;
Mittel (20,22) zur Umwandlung der genannten gespeicherten Daten in ein kommerzielles Video-Signal zur Wiedergabe;
Steuermittel (16), die mit den genannten Speichermitteln gekoppelt sind zum Zuführen der gespeicherten Daten, welche die genannte kommerzielle Anzeige darstellen, zu den geannnten Umwandlungsmitteln;
Schaltmittel (24), die durch die genannten Steuermittel betätigt werden zum Zuschalten der genannten kommerziellen Video-Signale zu der Wiedergabe des genannten Fernsehempfängers;
dadurch gekennzeichnet, daß die Steuermittel Abtastmittel aufweisen zum Abtasten der Wirkung wenigstens der Steuerschalter für die Kanalwahl oder des Lautstärkereglers und zum Auslösen der Wiedergabe des genannten kommerziellen Video-Signals in Antwort auf den genannten Abtastvorgang der genannten Steuerschalter.

2. Schaltungsanordnung nach Anspruch 1, wobei die gspeicherten Daten eine Anzahl Werbeanzeigen darstellen, wobei die Steuermittel dazu vorgesehen sind, diese Werbeanzeigen zyklisch durchzuschalten, jeweils wenn eine wiedergegeben werden soll.

3. Schaltungsanordnung nach Anspruch 1 oder 2, dadurch gekennzeichnet, daß diese weiterhin Mittel aufweist zum Aktualisieren der genannten in den genannten Speichermitteln gespeicherten Daten.

4. Schaltungsanordnung nach Anspruch 1, 2 oder 3, dadurch gekennzeichnet, daß diese weiterhin Mittel aufweist um abzutasten, ob diese Schaltungsanordnung von dem genannten Fernsehempfänger losgekoppelt worden ist, sowie mit dem genannten Fernsehempfänger verbundene Außerbetriebsetzmittel, um in Antwort auf die genannten Abtastmittel den Fernsehempänger außer Betrieb zu setzen.

5. Verfahren zur Werbung in einem Fernsehempfänger mit Schaltungsanordnungen (10) zum Empfangen, Verarbeiten und Wiedergaben von Fernsehsignalen, mit einer Steuereinheit (26) mit vom Gebraucher betätigbaren Steuerschaltern zur Steuerung mehrerer Standard-Betriebsfunktionen des Fernsehempfängers, wobei dieses Verfahren die nachfolgenden Verfahrensschritte umfaßt:
die örtliche Speicherung von Daten, die eine kommerzielle Werbeanzeige darstellen;
die Umwandlung der genannten gespeicherten Daten zu einem kommerziellen Video-Signal zur Wiedergabe;
die Zuführung gespeicherter Daten, welche die genannten kommerziellen Werbeanzeigen darstellen, zur Umwandlung zu dem genannten kommerziellen Video-Signal;
das Zuschalten des genannten kommerziellen Video-Signals zu der Wiedergabe des genannten Fernsehempfängers;
dadurch gekennzeichnet, daß der Verfahrensschritt der Abtastung der Wirkung wenigstens der Steuerschalter für Kanalwahl oder für die Lautstärkerregelung und der Durchführung der Wiedergabe des genannten kommerziellen Video-Signals in Antwort auf die genannte Abtastwirkung der genannten Steuerschalter.

6. Verfahren zur Werbung nach Anspruch 5, wobei die gespeicherten Daten eine Anzahl Werbeanzeigen darstellen, wobei das Verfahren den Verfahrensschritt umfaßt, wobei diese Werbeanzeigen jeweils, wenn eine wiedergegeben werden soll, zyklisch durchgeschaltet werden.

7. Verfahren zur Werbung nach Anspruch 5 oder 6, wobei dieses Verfahren weiterhin das periodische Aktualisieren der genannten Daten umfaßt, darnit verschiedene kommerzielle Werbeanzeigen dargestellt werden.

8. Verfahren zur Werbung nach Anspruch 5, 6 oder 7, wobei der geannnte Verfahrensschritt der Zuschaltung des genannten Video-Signals im Wesentlichen daraus besteht, daß die genannte kommerzielle Werbeanzeige einem Teil des wiedergegebenen Bildes überlagert wird.

9. Verfahren zur Werbung nach Anspruch 5, 6, 7 oder 8, wobei die genannten kommerziellen Werbeanzeigen aus animierten Bildern bestehen.

## Revendications

1. Agencement dans un récepteur de télévision pour générer localement une annonce publicitaire commerciale pour affichage, ledit récepteur de télévision comprenant des circuits (10) pour la sélection des canaux et pour le traitement et l'affichage des signaux de télévision sélectionnés, un contrôleur (26) comportant une pluralité de commutateurs de commande standards actionnables par l'utilisateur pour commander des fonctions opératoires standards respectives du récepteur de télévision, ledit agencement comprenant :
des moyens (12, 34, 28) pour stocker des données représentant une annonce publicitaire commerciale,
des moyens (20, 22) pour convertir lesdites données stockées en un signal vidéo commercial à afficher,
des moyens de commande (16) couplés auxdits moyens de stockage pour appliquer des données stockées représentant ladite annonce publicitaire commerciale auxdits moyens de conversion,
des moyens de commutation (24) commandés par lesdits moyens de commande pour commuter lesdits signaux vidéo commerciaux sur l'affichage dudit récepteur de télévision,
caractérisé en ce que les moyens de commande comprennent des moyens de détection pour détecter l'actionnement d'au moins les commutateurs de commande pour la sélection des canaux ou le réglage du volume sonore, et pour provoquer l'affichage dudit signal vidéo commercial en réaction à ladite opération de détection desdits commutateurs de commande.

2. Agencement selon la revendication 1, dans lequel les données stockées représentent une pluralité d'annonces publicitaires, lesdits moyens de commande étant à même de passer de l'une de ces annonces publicitaire à l'autre chaque fois qu'il faut en afficher une.

3. Agencement selon la revendication 1 ou 2, caractérisé en ce que ledit agencement comprend en outre des moyens pour mettre à jour lesdites données stockées dans lesdits moyens de stockage.

4. Agencement selon la revendication 1, 2 ou 3, caractérisé en ce que ledit agencement comprend en outre des moyens pour détecter si ledit agencement a été déconnecté dudit récepteur de télévision, et des moyens de désactivation connectés audit récepteur de télévision pour désactiver son fonctionnement en réaction auxdits moyens de détection.

5. Procédé d'affichage publicitaire sur un récepteur de télévision comprenant des circuits (10) pour recevoir, traiter et afficher des signaux de télévision, un contrôleur (26) comportant des commutateurs de commande standards actionnables par l'utilisateur pour commander diverses fonctions opératoires standards du récepteur de télévision, le procédé comprenant les étapes suivantes :
on stocke localement des données représentant une annonce publicitaire commerciale;
on convertit lesdites données stockées en un signal vidéo commercial pour affichage;
on applique les données stockées représentant ladite annonce publicitaire commerciale pour une conversion en ledit signal vidéo commercial;
on commute ledit signal vidéo commercial sur l'affichage dudit récepteur de télévision;
caractérisé en ce que l'on détecte l'actionnement d'au moins les commutateurs de commande pour la sélection des canaux ou le réglage du volume sonore et on effectue l'affichage dudit signal vidéo commercial en réponse à ladite opération de détection desdits commutateurs de commande.

6. Procédé d'affichage publicitaire selon la revendication 5, dans lequel les données stockées représentent une série d'annonces publicitaires, le procédé comprenant l'étape de passage de l'une de ces annonces publicitaires à l'autre, chaque fois qu'il faut en afficher une.

7. Procédé d'affichage publicitaire selon la revendication 5 ou 6, dans lequel ledit procédé comprend en outre la mise à jour périodique desdites données pour représenter différentes annonces publicitaires commerciales.

8. Procédé d'affichage publicitaire selon la revendication 5, 6 ou 7, dans lequel ladite étape de commutation dudit signal vidéo a pour effet de superposer efficacement ladite annonce publicitaire commerciale sur une partie de l'image affichée.

9. Procédé d'affichage publicitaire selon la revendication 5, 6, 7 ou 8, dans lequel lesdites annonces publicitaires commerciales sont constituées d'images animées.
